# DEMANDE DE BREVET EUROPEEN

(11) **EP 4 459 864 A1**
(43) Date de publication de la demande: **06.11.2024**
(21) Numéro de dépôt: 24174383.0
(22) Date de dépôt: 06.05.2024
(51) Int. Cl.: H02S 20/10, H02S 20/23, H02S 20/30

(54) **STRUCTURE PHOTOVOLTAÏQUE POUR OMBRAGER UNE ZONE DE STATIONNEMENT DE VEHICULES**

(30) Priorité: 05.05.2023 FR 2304542
(71) Demandeur: Proper2R, 44880 Sautron (FR)
(72) Inventeur: BOHADAS, Philippe, 44880 SAUTRON (FR)
(74) Mandataire: Oak & Fox

(57) **Abrégé**

L'invention se rapporte à une structure (100) destinée à ombrager une zone de stationnement de véhicules comprenant :
▪ Un ensemble solaire (110) comprenant une pluralité de panneaux solaires photovoltaïques (111) ;
▪ Un ensemble support comprenant :
o au moins deux supports primaires (121,122) espacés selon une première direction (D₁) et comprenant chacun une première poutre primaire (Pₚ₁) et une deuxième poutre primaire (Pₚ₂)
o un support secondaire (130) pour supporter les panneaux solaires photovoltaïques (111) et comprenant une pluralité de premières poutres secondaires s'étendant parallèlement à la première direction (D₁).

## Description

### Domaine de l'invention

L'invention concerne le domaine des structures destinées à fournir de l'ombre. En particulier, l'invention se rapporte au domaine des structure destinées à ombrager à une zone de stationnement de véhicules. Plus particulièrement, l'invention se rapporte au domaine des structures photovoltaïques destinées à ombrager une zone de stationnement de véhicules.

### État de la technique

Les véhicules stationnés sont sensibles aux conditions climatiques telles que l'exposition au soleil et les intempéries. Pour protéger les véhicules stationnés des événements dus aux conditions météorologiques, on connaît dans l'art antérieur des structures appelés « ombrières », parfois désignées par l'appellation « carport ». De telles structures comprennent généralement une surface de toiture montée sur des supports. La surface de toiture vise à protéger les véhicules du soleil et d'autres aléas météorologiques tels que la pluie, la neige ou la grêle en fournissant une surface de protection ombrageante.

De telles ombrières comprennent parfois des moyens pour convertir une partie du rayonnement solaire en énergie électrique. De telles ombrières sont désignées dans la littérature par l'appellation « ombrières photovoltaïques ». Dans ce cas, la surface de toiture comprend généralement des panneaux solaires pour convertir une partie du rayonnement solaire en énergie électrique. C'est le cas notamment de la demande de brevet FR2949243A1, qui divulgue une ombrière photovoltaïque comprenant une toiture rectangulaire montée sur deux structures d'élévation supportant la toiture au milieu de deux côtés opposés du rectangle. Les structures d'élévation sont constituées de deux poteaux inclinés, réunis l'un et l'autre et solidaires d'un socle de béton. La structure décrite dans cette demande de brevet présente l'inconvénient de manquer de solidité du fait de l'existence d'un unique point d'appui des panneaux solaires sur chaque support de la structure. Un autre inconvénient de la structure décrite dans cette demande de brevet est qu'il existe un risque de modification involontaire de l'angle d'inclinaison des panneaux solaires une fois la structure installée du fait de la présence de cet unique point d'appui sur chaque support de la structure.

Un autre inconvénient des structures de l'art antérieur est qu'elles ne permettent pas d'obtenir un rendement optimal de production des panneaux solaires quelles que soient les conditions climatiques.

Un autre inconvénient de certaines solutions de l'art antérieur est qu'elles ne permettent pas de faire varier l'inclinaison des panneaux solaires indépendamment du support de ces panneaux solaires.

Un objectif de l'invention est de au moins limiter les inconvénients précités.

### Résumé de l'invention

Selon un premier aspect, l'invention concerne une structure destinée à ombrager une zone de stationnement de véhicules, ladite structure comprenant :
- Un ensemble solaire comprenant une pluralité de panneaux solaires photovoltaïques ;
- Un ensemble support comprenant :
   ∘ au moins deux supports primaires espacés selon une première direction et comprenant chacun une première poutre primaire et une deuxième poutre primaire, chaque deuxième poutre primaire s'étendant selon une deuxième direction sensiblement orthogonale à la première direction et chaque première poutre primaire s'étendant selon une troisième direction verticale, et chaque deuxième poutre primaire étant reliée à la première poutre primaire de son support primaire respectif ;
   ∘ un support secondaire pour supporter les panneaux solaires photovoltaïques et comprenant une pluralité de premières poutres secondaires s'étendant selon une direction sensiblement parallèle à la première direction, et présentant chacune au moins une zone d'appui sur chaque deuxième poutre primaire de chaque support primaire ;
l'ensemble solaire étant apte à se trouver dans une pluralité de configurations opérationnelles dans lesquelles les panneaux solaires forment chacun un angle primaire non nul autour d'un axe primaire sensiblement parallèle à la première direction et un angle secondaire non nul autour d'un axe secondaire sensiblement parallèle à la deuxième direction et avec un plan de référence défini par une direction sensiblement parallèle à ou confondue avec la première direction et par une direction sensiblement parallèle à ou confondue avec la deuxième direction.

Un avantage est de proposer une structure apte à permettre de faire varier les inclinaisons des panneaux solaires selon une pluralité de directions de l'espace pour obtenir un rendement optimisé quelles que soient les conditions d'ensoleillement.

Un autre avantage est de proposer une structure apte à permettre tout angle d'inclinaison des panneaux à 360° pour obtenir des conditions d'exposition optimales des panneaux au rayonnement solaire.

Un autre avantage est d'obtenir une structure stable avec une charge minimisée pour limiter les contraintes mécaniques dues au poids de l'ensemble solaire.

Un autre avantage est d'éviter l'accumulation de neige ou de pluie sur la structure en cas de conditions météorologiques défavorable de par l'espacement des poutres secondaires, et ainsi de limiter les contraintes mécaniques sur la structure.

Un autre avantage est de proposer une structure permettant d'ombrager une zone de stationnement de véhicule tout en étant apte à permettre une production électrique par un système photovoltaïque dont le rendement peut être optimisé en fonction des conditions météorologiques.

Dans un mode de réalisation, l'ensemble solaire est connecté à des moyens d'activation pour faire varier les angles primaires et les angles secondaires formés par les panneaux solaires avec un plan de référence.

Un avantage est de permettre à un utilisateur de faire varier les angles d'inclinaison des panneaux solaires pour optimiser le rendement photovoltaïque de la structure.

Dans un mode de réalisation, l'ensemble support comprend une pluralité de supports pour soutenir les panneaux solaires, dits supports solaires, présentant chacun au moins une zone d'appui avec au moins une première poutre secondaire, et connectés aux moyens d'activation pour faire varier les angles primaires et les angles secondaires desdits panneaux solaires.

Un avantage est de renforcer le maintien, la stabilité et la résistance des panneaux solaires sur la structure.

Un autre avantage est de permettre de faire varier l'inclinaison d'un élément intermédiaire pour faire varier l'inclinaison des panneaux solaires.

Un autre avantage est de faciliter la maintenance et le remplacement éventuel d'un panneau solaire.

Dans un mode de réalisation, au moins un support solaire comprend un premier élément longitudinal relié à un panneau solaire en une première zone de liaison et qui s'étend dans une direction sensiblement parallèle à la première direction ou sensiblement parallèle à la deuxième direction, et un deuxième élément longitudinal relié au même panneau solaire en une deuxième zone de liaison et qui s'étend dans une direction sensiblement parallèle à la troisième direction, le premier élément longitudinal et le deuxième élément longitudinal étant reliés mécaniquement en un point de liaison mécanique, les moyens d'activation étant configurés pour actionner le support solaire pour faire varier les angles primaires et les angles secondaires dudit panneau solaire avec un plan de référence.

Un avantage est de proposer une structure simple n'appliquant que peu de contrainte sur la structure globale pour renforcer les panneaux solaires et pour faire varier leurs inclinaisons.

Dans un mode de réalisation, les moyens d'activation comprennent un calculateur configuré pour piloter une pluralité de panneaux solaires de l'ensemble solaire soit automatiquement à partir de paramètres prédéfinis, soit au moyen d'une interface de commande utilisateur locale ou depuis un serveur distant.

Un avantage est de permettre d'automatiser le pilotage des panneaux solaires en fonction de paramètres permettant de maximiser le rendement, par exemple de paramètres définissant des orientations souhaitables en fonction de mesures réalisées par des capteurs.

Un autre avantage est de permettre à un utilisateur de piloter les panneaux de l'ensemble solaire, soit localement soit à distance.

Dans un mode de réalisation, l'ensemble solaire est apte à être dans au moins quatre configurations opérationnelles différentes comprenant :
- Une première configuration opérationnelle dans laquelle les panneaux solaires forment, avec le plan de référence, un premier angle primaire non nul autour d'un premier axe primaire et un premier angle secondaire nul autour d'un premier axe secondaire ;
- Une deuxième configuration opérationnelle dans laquelle les panneaux solaires forment, avec le plan de référence, un deuxième angle primaire non nul et distinct du premier angle primaire autour du premier axe primaire, et le premier angle secondaire autour du premier axe secondaire ;
- Une troisième configuration opérationnelle dans laquelle les panneaux solaires forment, avec le plan de référence, un deuxième angle secondaire non nul autour du deuxième axe et un troisième angle primaire nul autour du premier axe,
- Une quatrième configuration opérationnelle dans laquelle les panneaux solaires forment, avec le plan de référence, un troisième angle secondaire non nul distinct du deuxième angle secondaire autour du deuxième axe et le troisième angle primaire nul autour du premier axe

Un avantage est de proposer une structure dans laquelle les panneaux solaires sont orientables selon une pluralité de directions combinées pour obtenir un ensoleillement optimal en fonction des conditions météorologiques.

Dans un mode de réalisation, l'ensemble solaire est apte à être dans au moins quatre configurations opérationnelles supplémentaires comprenant :
- Une cinquième configuration opérationnelle dans laquelle les panneaux solaires forment, avec le plan de référence, le premier angle primaire et le deuxième angle secondaire ;
- Une sixième configuration opérationnelle dans laquelle les panneaux solaires forment, avec le plan de référence, le deuxième angle primaire et le deuxième angle secondaire ;
- Une septième configuration opérationnelle dans laquelle les panneaux solaires forment, avec le plan de référence, le premier angle primaire et le troisième angle secondaire,
- Une huitième configuration opérationnelle dans laquelle les panneaux solaires forment, avec le plan de référence, le deuxième angle primaire et le troisième angle secondaire.

Un avantage est de proposer une structure dans laquelle les panneaux solaires sont aptes à se trouver dans des configurations d'inclinaison supplémentaire pour maximiser le rendement de production électrique en fonction des conditions d'ensoleillement.

Dans un mode de réalisation, l'ensemble solaire comprend une pluralité de rangées de panneaux solaires parallèles entre elles et espacées selon une direction sensiblement parallèle à la première direction ou sensiblement parallèle à la deuxième direction, l'ensemble solaire étant apte à être dans une pluralité de configurations opérationnelles dans chacune desquelles les panneaux solaires de chaque rangée de panneaux solaires forment, avec un plan de référence pris parmi une pluralité de plans de références parallèles entre eux, un angle primaire autour d'un premier axe pris parmi une pluralité de premiers axes parallèles entre eux, et un angle secondaire autour d'un deuxième axe pris parmi une pluralité de deuxièmes axes parallèles entre eux.

Un avantage est de répartir de manière optimale les contraintes mécaniques liées au poids des panneaux solaires sur la structure.

Dans un mode de réalisation, l'ensemble solaire et les moyens d'activation sont configurés pour faire varier les angles primaires et les angles secondaires formés par les panneaux solaires de chaque rangée de panneaux solaires de sorte que les rangées de panneaux solaires sont orientables indépendamment les unes des autres.

Un avantage est de permettre des orientations indépendantes de chaque rangée de panneaux solaires pour maximiser l'exposition au rayonnement solaire de chaque panneau pour maximiser le rendement de production électrique photovoltaïque.

Dans un mode de réalisation, au moins un support primaire comprend une structure externe délimitant une première cavité remplie au moins partiellement par un matériau de lestage et comprenant une ouverture positionnée sur sa deuxième poutre primaire respective, la première cavité débouchant sur ladite ouverture pour permettre l'infiltration de l'eau de pluie dans ladite première cavité.

Un avantage est de récupérer l'eau de pluie s'accumulant sur la structure pour limiter les contraintes mécaniques appliquées verticalement sur la structure qui viendraient s'ajouter au poids de l'ensemble solaire.

Dans un mode de réalisation, le matériau de lestage comprend un matériau poreux.

Un avantage est de mettre à profit la récupération des eaux de pluie en renforçant la stabilité de la structure, le matériau poreux absorbant l'eau de pluie de sorte à augmenter sa densité et renforçant ainsi la stabilité de la structure.

Dans un mode de réalisation, au moins un support primaire comprend une gouttière permettant l'acheminement de l'eau de pluie vers l'ouverture.

Un avantage est de guider l'eau de pluie s'accumulant sur la structure vers une ouverture débouchant sur la première cavité.

Dans un mode de réalisation, chaque support primaire comprend une structure externe délimitant la première cavité et une structure interne disposée dans la première cavité pour maintenir chaque support primaire dans une position montée stable.

Un avantage est de renforcer la stabilité et la résistance aux efforts de la structure.

Dans un mode de réalisation, l'ensemble solaire comprend au moins une deuxième gouttière encadrant au moins une rangée de panneaux solaires, et comprenant au moins une ouverture en une extrémité pour permettre l'écoulement de l'eau de pluie vers une première gouttière.

Un avantage est de maximiser la récupération des eaux de pluie pour limiter davantage les contraintes appliquées sur la structure et éventuellement renforcer davantage la stabilité de la structure en profitant d'une synergie avec la présence d'un éventuel matériau de lestage poreux dans la première cavité.

Dans un mode de réalisation, l'ensemble support comprend un bloc de liaison reliant les supports primaires et comprenant une deuxième cavité comprenant le matériau de lestage débouchant sur la première cavité.

Un avantage est de renforcer la stabilité de la structure.

Un autre avantage est de mettre à disposition un élément structurel additionnel permettant d'accueillir d'éventuels équipements additionnels, tels que des bornes de recharge de véhicule.

Un autre avantage est de relier les deux supports primaires entre eux pour faciliter le passage de câbles électriques au sein de la structure.

Dans un mode de réalisation, l'ensemble support est modulaire et comprend des éléments mécaniques aptes à recevoir au moins un élément de support modulaire additionnel.

Un avantage est de permettre d'agencer la structure selon des conditions optimales, par exemple en déplaçant la position des supports pour libérer de l'espace au sol.

Un autre avantage est de permettre le remplacement aisé d'éléments structurels défectueux.

Un autre avantage est de permettre l'ajout de modules au cours de la vie de l'ombrière en fonction de l'évolution des besoins, par exemple des éléments de guidage de câbles supplémentaires, des éléments de recharge connectés électriquement aux panneaux solaires, ou tout autre élément structurel adéquat.

Dans un mode de réalisation, les éléments mécaniques sont aptes à recevoir une pièce de liaison reliant les deux supports primaires, ladite pièce de liaison étant apte guider des câbles électriques entre lesdits supports primaires et ladite pièce de liaison étant apte à recevoir une borne électrique de recharge de véhicule connectée auxdits câbles électriques pour alimenter ladite borne de recharge à partir d'une énergie électrique produite par les panneaux solaires.

Un avantage est de permettre l'ajout d'une borne de recharge de véhicule à proximité directe du parking ombragé par la structure et alimenté directement via la production électrique photovoltaïque.

Dans un mode de réalisation, les supports primaires comprennent chacun une base respective présentant une zone d'appui au sol et dans laquelle l'ensemble support comprend des portions basses de lestage reliées aux bases comprenant une cavité interne remplie par un matériau de lestage.

Un avantage est de renforcer la stabilité et la robustesse de la structure.

Un autre avantage est de compenser les contraintes de charges appliquées sur la structure.

Un autre avantage est de permettre de s'affranchir des fondations présentes dans les structures de l'art antérieur.

Dans un mode de réalisation, les bases comprennent une cavité interne remplie par le matériau de lestage et débouchant sur la première cavité, et dans laquelle les portions basses de lestage débouchent sur la cavité interne des bases.

Un avantage est de permettre l'écoulement de l'eau de pluie récupérée jusque dans les bases pour renforcer encore la stabilité de la structure.

### Brève description des figures

D'autres caractéristiques et avantages de l'invention ressortiront à la lecture de la description détaillée qui suit, en référence aux figures annexées, qui illustrent :
Fig. 1 : Une représentation schématique d'une vue en perspective d'un exemple d'une structure selon un mode de l'invention dans lequel l'ensemble solaire comprend plusieurs rangées de panneaux solaires présentant chacun un angle d'inclinaison par rapport à un plan de référence et autour d'un axe primaire s'étendant selon la première direction.
Fig.2 : Une représentation schématique d'une vue en perspective d'un ensemble support de la structure de la figure 1.
Fig.3 : Une représentation schématique de différentes inclinaisons d'un panneau solaire de l'ensemble solaire autour d'un premier axe primaire.
Fig.4 : Une représentation schématique de différentes inclinaisons d'un panneau solaire de l'ensemble solaire autour d'un deuxième axe secondaire orthogonal au premier axe primaire.
Fig.5 : Une représentation schématique d'une inclinaison d'un panneau solaire de l'ensemble solaire lorsqu'il présente un angle primaire non nul autour d'un axe primaire et un angle secondaire non nul autour d'un axe secondaire.
Fig.6 : Une représentation schématique de l'intérieur d'une structure selon un mode de l'invention dans lequel elle comprend un bloc de liaison reliant les supports et dans lequel les supports et le bloc de liaison sont remplis par un matériau de lestage.
Fig.7 : Une représentation schématique, en vue de dessus, d'une deuxième poutre primaire d'un support primaire selon un mode de réalisation l'invention dans lequel la poutre primaire présente une ouverture pour recevoir les eaux de pluie.
Fig.8 : Une représentation schématique de l'ensemble support et de l'ensemble solaire, dans un mode de réalisation ou l'ensemble solaire comprend un support solaire pour soutenir un panneau solaire, pilotable par les moyens d'activation pour faire varier les angles primaires et secondaires du panneau solaire avec un plan de référence.

### Description de l'invention

La présente invention se rapporte à une structure 100 destinée à fournir de l'ombre à une zone de stationnement de véhicule. Il s'agit, par exemple, d'une zone de stationnement de véhicules comprenant des places de parking pour véhicules motorisés.

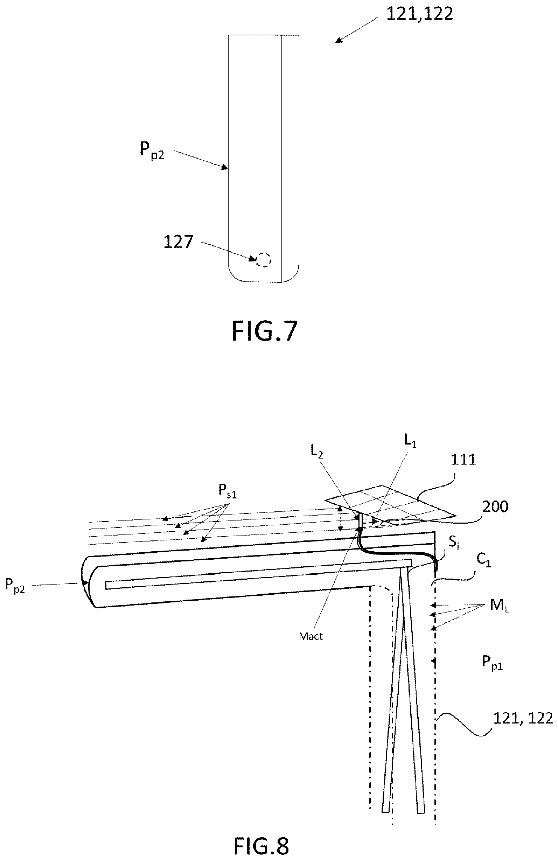

Dans la présente description :
▪ On désigne indifféremment la structure 100 par les termes « structure », « structure ombrageante », ou encore « ombrière »,
▪ On désigne un « ensemble solaire » 110 pour faire référence à un ensemble structurel comprenant des panneaux solaires photovoltaïques 111,
▪ On désigne un « ensemble support » 120 pour faire référence à un ensemble structurel apte à soutenir l'ensemble solaire 110. L'ensemble support 120 comprend au moins deux supports primaires 121, 122. Chaque support primaire 121,122 comprend une première poutre primaire Pₚ₁ et une deuxième poutre primaire Pₚ₂,
▪ On définit une première direction D₁ correspondant à une direction d'espacement entre les deux supports primaires 121,122,
▪ On définit une deuxième direction D₂ sensiblement orthogonale à la première direction D₁ correspondant à une direction dans laquelle s'étend une poutre secondaire Pₚ₂ d'un support 121, 122,
▪ On définit une troisième direction D₃ verticale correspondant à une direction dans laquelle s'étend une poutre primaire Pₚ₁ d'un support primaire 121, 122. La troisième direction D₃ est par exemple sensiblement orthogonale à la première direction D₁ et à la deuxième direction D₂,
▪ On définit des plans de référence Pₓ parallèles entre eux pour faire référence à des plans formés par des directions parallèles ou confondues avec la première direction D₁ et la deuxième direction D₂. Par exemple, un premier plan de référence P₁ est formé par la première direction D₁ et la deuxième direction D₂. Ces plans de références Pₓ permettent de définir des angles d'inclinaisons des panneaux solaires 111 autour d'axes primaires notés Xₓ et d'axes secondaires notés Yₓ. Les axes primaires Xₓ s'étendent dans des directions parallèles à la première direction D₁ et les axes secondaires Yₓ s'étendent dans des directions parallèles à la deuxième direction D₂. De cette manière, il est possible de définir des angles d'inclinaison des panneaux solaires 111 selon plusieurs directions dans l'espace, par exemple des inclinaisons dans des directions parallèles ou non parallèles à la première direction D₁ et à la deuxième direction D₂. L'invention permet notamment une orientation des panneaux solaires 111 de l'ensemble solaire 110 à 360° indépendamment de l'ensemble support 120 qui reste par exemple fixe,
▪ On définit des angles d'inclinaison primaires et secondaires αₓ et βₓ. Ces angles sont formés par les panneaux solaires 111 de l'ensemble solaire 110 avec un plan de référence Pₓ lorsque l'ensemble solaire se trouve dans différentes configurations opérationnelles. Ainsi, lorsque les panneaux solaires 111 de l'ensemble solaire 110 forment des angles αₓ et/ou βₓ non nuls avec un plan de référence Pₓ, l'ensemble solaire 110 se trouve dans des configurations dans lesquelles il est incliné par rapport à une configuration opérationnelle dans laquelle les angles αₓ et βₓ sont nuls,
▪ On définit des angles primaires αₓ par des angles d'inclinaison formés par les panneaux solaires 111 de l'ensemble solaire 110 avec le plan de référence P₁ autour du premier axe X₁,
▪ On définit des angles secondaire βₓ par les angles d'inclinaison formé par les panneaux solaires 111 de l'ensemble solaire 110 avec le plan de référence P₁ autour du deuxième axe Y₁,
▪ Les indices x des angles primaires αₓ et des angles secondaires βₓ visent à indiquer que ces angles peuvent prendre des valeurs différentes en fonction de la configuration opérationnelle dans laquelle se trouve l'ensemble solaire,
▪ Les indices x des plans de références Pₓ, des axes primaires Xₓ et des axes secondaires Yₓ visent à définir différents plans dans lesquels sont formés les angles (par exemple lorsque les panneaux solaires sont arrangés par rangées parallèles, les panneaux solaires de chaque rangée forment des angles autour d'axes parallèles et dans des plans parallèles à ceux des autres rangées.),
▪ On appelle « supports solaires 200 » des supports sur lesquels reposent les panneaux solaires 111. Les supports solaires 200 sont par exemple reliés mécaniquement aux panneaux solaires 111. Ils sont par exemple reliés mécaniquement au moyen d'une liaison mécanique, par exemple une liaison pivot, une liaison glissière, un encastrement, une liaison pivot glissant, un appui plan, une liaison sphérique ou une liaison rotule. Les supports solaires 200 sont par exemple connectés à des moyens d'activation M_{act} pour faire varier les angles d'activation de chaque panneau solaire 111, soit indépendamment les uns des autres selon des angles d'inclinaison différents, soit selon des angles sensiblement identiques. Un exemple de support solaire 200 dans un mode particulier de l'invention est illustré en figure 8. Dans ce mode de réalisation, le support solaire 200 comprend des deuxièmes poutres secondaires comprenant un premier élément longitudinal L₁ et un deuxième élément longitudinal L₂ Les deux éléments longitudinaux forment un angle de sensiblement 90° entre eux. Le support solaire 200 peut présenter une pluralité de points de liaison mécanique, ou zones de liaison mécanique avec le panneau solaire 111, par exemple deux points de liaison. Le support solaire 200 présente par exemple un premier point de liaison mécanique, ou une zone de liaison mécanique sur son premier élément longitudinal L₁ et présente par exemple un deuxième point de liaison mécanique, ou zone de liaison mécanique, en son deuxième élément longitudinal L₂, et avec une ou plusieurs première poutre secondaire Pₛ₁. Le premier élément longitudinal L₁ s'étend par exemple dans une direction sensiblement parallèle à la première direction D₁ ou sensiblement parallèle à la deuxième direction D₂. Le deuxième élément longitudinal L₂ s'étend par exemple dans une direction sensiblement parallèle à la troisième direction D₃. Le support solaire 200 présente par exemple sensiblement une forme de « L inversé ». La longueur du deuxième élément longitudinal L₂ est par exemple inférieure à la longueur du premier élément longitudinal L₁. Dans un mode de réalisation, le support solaire 200 est configuré de sorte que la longueur du deuxième élément longitudinal L₂ est apte à varier. Cela est par exemple rendu possible grâce aux moyens d'activation M_{act}. Les moyens d'activation M_{act} sont par exemple alimentés électriquement, par exemple grâce à l'énergie produite par les panneaux solaires 111. Selon un premier exemple, les moyens d'activation M_{act} sont aptes à faire varier la position du support solaire 200 selon la troisième direction D₃, par exemple en faisant varier l'inclinaison du premier élément longitudinal L₁ selon la direction D₃. Selon un autre exemple non représenté, le support solaire 200 comprend des moyens télescopiques pour faire varier une longueur d'un élément longitudinal du support solaire 200. Dans un mode de réalisation (non représenté), le support solaire 200 comprend deux éléments longitudinaux s'étendant selon une direction sensiblement parallèle à la troisième direction. Ces deux éléments longitudinaux sont par exemple reliés mécaniquement au panneau solaire 111 et reliés au premier élément longitudinal L₁ en ses extrémités, par exemple selon des angles de sensiblement 90°. Les moyens d'activation M_{act} sont par exemple aptes à faire varier indépendamment les longueurs des deux éléments longitudinaux qui s'étendent selon une direction sensiblement parallèle à la troisième direction D₃, de sorte à faire varier les angles d'inclinaison du panneau solaire 111. Dans un mode de réalisation, l'ensemble solaire 110 comprend une pluralité de supports solaires 200. La pluralité de supports solaires 200 est par exemple reliée mécaniquement à un panneau solaire 111. La pluralité de supports solaires 200 comprend par exemple des supports solaires 200 comprenant des premiers éléments longitudinaux L₁ sensiblement parallèles entre eux, et sensiblement parallèles à la première direction D₁ ou sensiblement parallèle à la deuxième direction D₂, et chacun desdits supports solaires 200 comprend par exemple au moins un deuxième élément longitudinal L₂, par exemple sensiblement parallèles entre eux et sensiblement parallèles à la troisième direction D₃,
▪ Dans la présente description, le terme sensiblement est utilisé pour indiquer une marge de tolérance quant à l'interprétation de plusieurs termes, par exemple les termes « sensiblement parallèle » et « sensiblement orthogonal ». Par exemple, lorsqu'il est indiqué que les deuxièmes poutres primaires Pₚ₂ s'étendent dans une direction sensiblement orthogonale à la première direction, une marge d'erreur d'environ 15° sera considérée comme acceptable et entrant dans le champ des termes « sensiblement orthogonale ». Il en va de même lorsqu'on fait référence à des directions sensiblement parallèles.

La présente description s'appuie sur divers modes de réalisation. Plusieurs variantes de réalisation sont décrites pour chacun de ces modes de réalisation. Ces variantes peuvent s'appliquer indifféremment à chacun de ces modes de réalisation. Ainsi, les caractéristiques décrites pour un mode de réalisation sont directement applicables à un autre mode de réalisation. L'invention protège les différentes combinaisons de caractéristiques décrites au travers de ces modes de réalisation.

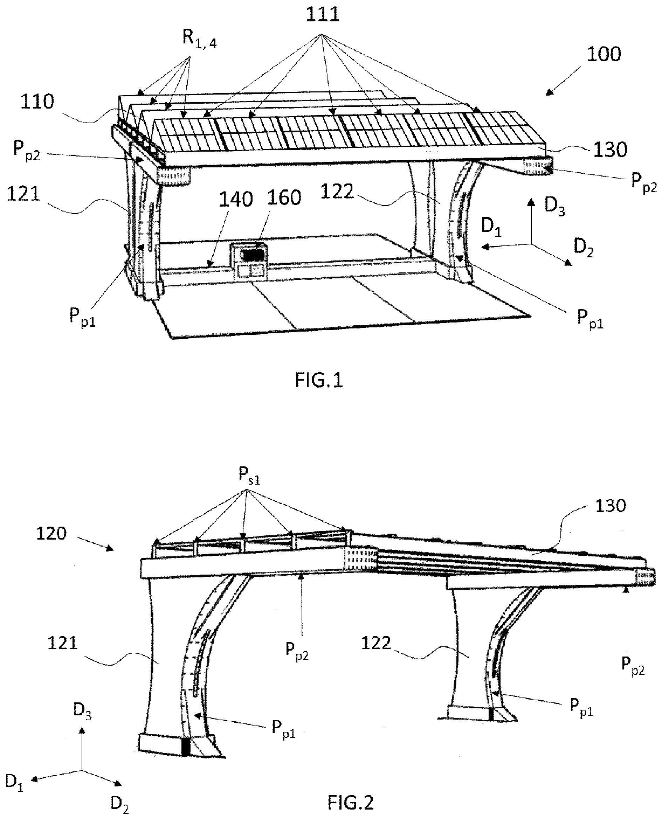

La figure 1 illustre un cas d'une structure 100 selon un mode de réalisation de l'invention.

### Ensemble solaire

La structure 100 comprend un ensemble solaire 110 comprenant une pluralité de panneaux solaires photovoltaïques 111. Les panneaux solaires photovoltaïques 111 sont également désignés dans la littérature par les termes « modules photovoltaïques », ou simplement « panneaux solaires ». Les panneaux solaires photovoltaïques 111 comprennent des cellules photovoltaïques connectées électriquement en série et/ou en parallèle. Les panneaux solaires photovoltaïques 111 captent une partie du rayonnement solaire et la convertissent en électricité au moyen des cellules photovoltaïques. Les cellules photovoltaïques comprennent des semi-conducteurs. Les semi-conducteurs comprennent par exemple du silicium, tel que du silicium amorphe, monocristallin ou polycristallin. Selon d'autres exemples, les semi-conducteurs comprennent un séléniure de cuivre-indium (CuIn(Se)₂, également appelé CIS), un séléniure de cuivre d'indium et de gallium (CuInGa(Se)₂, aussi appelé CIGS), ou encore un tellurure de cadmium (CdTe). Selon d'autres exemples, les cellules photovoltaïques comprennent une cellule à pérovskite ou encore des cellules photovoltaïques organiques telles que des cellules photovoltaïques en polymères. Les cellules photovoltaïques sont par exemple disposées sous forme de plaques.

Selon un mode de réalisation, l'ensemble solaire 110 présente une forme globalement rectangulaire.

Selon un mode de réalisation, les dimensions de l'ensemble solaire sont par exemple comprises entre 2,5m et 7m pour un premier côté s'étendant selon une direction sensiblement parallèle à la deuxième direction D₂ et comprises entre 5m et 15m pour un deuxième côté s'étendant selon une direction sensiblement parallèle à la première direction D₁. La masse de l'ensemble solaire est par exemple comprise entre 150kg et 400kg. La masse de l'ensemble solaire 110 correspond par exemple la somme des masses des panneaux solaires 111. Selon un autre exemple, la masse de l'ensemble solaire 110 correspond à la somme des masses des panneaux solaires et de leurs supports solaires 200 respectifs.

Selon un mode de réalisation, les panneaux solaires 111 de l'ensemble solaire 110 sont espacées les uns des autres selon la première direction D₁ ou une direction parallèle à cette direction. Les panneaux solaires 111 de l'ensemble solaire 110 peuvent également être espacés les uns des autres selon la deuxième direction D₂ ou une direction parallèle à cette direction. Selon un autre exemple, l'ensemble solaire 110 comprend des panneaux solaires 111 espacés selon la première direction D₁ ou une direction parallèle à cette direction et des panneaux solaires 111 espacés selon la deuxième direction D₂ ou une direction parallèle à cette direction.

Avantageusement, les panneaux solaires sont répartis de manière optimale pour équilibrer la charge sur l'ensemble support 120. Cette répartition avantageuse est par exemple obtenue lorsque les panneaux solaires présentent des espacements réguliers les uns des autres selon la première direction D₁ et/ou la deuxième direction D₂ et/ou des directions parallèles à ces directions.

Selon un mode de réalisation, les panneaux solaires 111 sont agencés selon des rangées R_{1, x}. La notation « R_{1, x} »se rapporte au nombre de rangées de panneaux solaires de la structure 100. Par exemple, la figure 1 illustre un cas dans lequel la structure comprend quatre rangées de panneaux solaires R_{1, 4}. Le nombre de rangées peut être inférieur ou supérieur, en fonction de la taille de la structure, du poids des panneaux solaires et de la répartition des panneaux générant des contraintes spécifiques sur l'ensemble support 120.

Avantageusement, les panneaux solaires sont espacés selon la première direction D₁ et/ou la deuxième direction D₂ et/ou des directions parallèles à ces directions pour permettre une inclinaison des panneaux solaires selon une pluralité de directions de l'espace. L'espacement est par exemple avantageusement choisi de sorte que les panneaux solaires 111 n'interfèrent pas les uns avec les autres lors de leur inclinaison.

Selon un mode de réalisation, les panneaux solaires 111 sont inclinables indépendamment les uns des autres.

Selon un mode de réalisation, les panneaux solaires 111 de chaque rangée de panneaux solaires R_{1, x} sont inclinables selon des angles identiques pour les panneaux d'une même rangée de panneaux solaires R_{1, x} et indépendamment de l'inclinaison des panneaux solaires 111 d'une autre rangée de panneaux solaires R_{1, x.}

Selon un mode de réalisation, l'ensemble solaire 110 comprend des gouttières. Les gouttières sont par exemple montées autour des panneaux solaires 111. Les gouttières forment par exemple un cadre autour des panneaux solaires 111. Les gouttières sont par exemple de largeur comprise entre 5cm et 20cm. Les gouttières comprennent par exemple des bordures incurvées pour permettre l'écoulement de l'eau de pluie. Les gouttières comprennent par exemple des ouvertures pour permettre l'évacuation de l'eau de pluie en dehors desdites gouttières. Les ouvertures sont par exemple ménagées dans les coins du cadre formé par les gouttières autour des panneaux solaires 111.

Selon un mode de réalisation, l'ensemble solaire est apte à être dans au moins une configuration opérationnelle dans laquelle il est fixe par rapport aux supports primaires 121,122 et dans laquelle chaque panneau solaire 111 présente au moins une zone d'appui sur l'ensemble support 120. Les panneaux solaires 111 peuvent présenter une pluralité de points d'appui ou de zones d'appui avec l'ensemble support 120.

Les panneaux solaires 111 sont par exemple en appui sur une structure secondaire 130 de l'ensemble support 120.

Les deux zones d'appui au niveau desquelles l'ensemble solaire est en appui sur les supports 120,130 sont par exemple espacées selon la deuxième direction D₂.

Dans un mode de réalisation, l'ensemble solaire 110 comprend au moins un support solaire 200. Chaque panneau solaire 111 repose par exemple sur un support solaire 200, ou sur une pluralité de supports solaires 200. Les supports solaires 200 sont par exemple connectés aux moyens d'activation M_{act} pour faire varier au moins une longueur d'un élément longitudinal dudit support solaire 200 selon une direction sensiblement parallèle à la troisième direction D₃. Il s'agit par exemple d'une connexion mécanique et d'une connexion électrique pour piloter une inclinaison d'un panneau solaire 111 ou d'un support solaire 200 auquel est relié mécaniquement ou sur lequel repose un panneau solaire 111. Un avantage est de faire varier les angles des panneaux solaires par l'intermédiaire des moyens d'activation. Un autre avantage est de faire varier l'inclinaison des panneaux solaires tout en conservant l'ensemble support 120 fixe.

Dans un mode de réalisation, le support solaire 200 comprend un élément longitudinal reposant sur une première poutre secondaire Pₛ₂ sur toute sa longueur. Il s'agit par exemple du premier élément longitudinal L₁.

Dans un mode de réalisation, chaque support solaire 200 comprend un élément longitudinal présentant une pluralité de zones d'appui avec une pluralité de premières poutres secondaires Pₛ₂. Il s'agit par exemple du premier élément longitudinal L₁.

Selon un mode de réalisation, l'ensemble solaire comprend des capteurs. Les capteurs sont par exemple des capteurs de luminosité. Les capteurs de luminosité sont par exemple disposés entre les panneaux solaires 110. Selon d'autres exemples, les capteurs comprennent des capteurs de pression, tels que des anémomètres pour mesurer la pression du vent sur l'ensemble solaire.

### Ensemble support

La structure 100 comprend un ensemble support 120 comprenant au moins les deux supports primaires 121,122. Les supports primaires 121,122 sont espacés selon la première direction D₁. La première direction D₁ est par exemple liée aux supports primaires 121,122. On entend par « liée aux supports primaires » que la première direction D₁ dépend du positionnement des supports primaires 121,122. La première direction D₁ correspond à une direction suivant laquelle sont espacés les deux supports primaires 121,122.

L'ensemble support 120 comprend une structure secondaire 130 pour supporter les panneaux solaires photovoltaïques 111. Le support secondaire 130 comprend une pluralité de premières poutres secondaires Pₛ₁ qui s'étendent dans des directions sensiblement parallèles à la première direction D₁. Le support secondaire 130 présente par exemple une forme sensiblement rectangulaire.

Les premières poutres secondaires P_{S1} présentent chacune une zone d'appui sur chaque deuxième poutre primaire Pₚ₂ de chaque support primaire 121, 122.

Dans un mode de réalisation, le point d'appui ou la zone d'appui d'au moins une première poutre secondaire Pₛ1 sur la deuxième poutre primaire Pₚ₂ se trouve sur une surface supérieure de ladite deuxième poutre primaire Pₚ₂. Dans ce cas, la première poutre secondaire Pₛ₁ repose par exemple sur ladite deuxième poutre primaire Pₚ₂, par exemple en une des extrémités de ladite première poutre secondaire Pₛ₁.

Dans un mode de réalisation, la première poutre secondaire Pₛ₁ présente une pluralité de points d'appui ou de zones d'appui avec la deuxième poutre primaire Pₚ₂. Il s'agit par exemple d'une zone d'appui sur une surface supérieure de la deuxième poutre primaire Pₚ₂ et d'une zone d'appui sur une surface inférieure de la deuxième poutre primaire Pₚ₂. Au moins une zone d'appui présente par exemple un élément de liaison mécanique pour solidariser les deux poutres, par exemple une ou plusieurs vis.

Les panneaux solaires 111 de l'ensemble solaire 110 reposent par exemple sur les premières poutres secondaires Pₛ₁ du support secondaire 130 en une zone d'appui. Il s'agit par exemple d'une zone d'appui s'étendant selon l'axe longitudinal de la première poutre secondaire Pₛ₁.

Selon un mode de réalisation, les panneaux solaires 111 de l'ensemble solaire 110 présentent au moins une liaison mécanique avec l'ensemble support 120. Chaque liaison mécanique 120,130 maintient les panneaux solaires 111 en appui sur l'ensemble support 120. Il s'agit par exemple d'une liaison mécanique au niveau des zones d'appui de chaque panneau solaire 111 avec une première poutre secondaire Pₛ₁.

La liaison mécanique autorise par exemple une pluralité de degrés de liberté. Selon différents exemples, chaque liaison mécanique comprend une liaison parmi les exemples suivants : une liaison pivot, une liaison glissière, un encastrement, une liaison pivot glissant, un appui plan, une liaison sphérique ou une liaison rotule. La liaison mécanique comprend par exemple une pièce intermédiaire qui relie une zone d'appui de l'ensemble solaire à une zone de réception des supports 120,130.

La structure secondaire 130 repose par exemple sur les supports primaires 121, 122 en plusieurs points d'appui ou zones d'appui. La structure secondaire 130 comprend une pluralité de poutres secondaires Pₛ qui s'étendent sensiblement parallèlement à la première direction D₁.

Selon un mode de réalisation, les panneaux solaires 111 de l'ensemble solaire 110 présentent au moins une liaison mécanique avec l'ensemble support 120. Chaque liaison mécanique 120,130 maintient les panneaux solaires 111 en appui sur l'ensemble support 120. Selon différents exemples, chaque liaison mécanique comprend une liaison parmi les exemples suivants : une liaison pivot, une liaison glissière, un encastrement, une liaison pivot glissant, un appui plan, une liaison sphérique ou une liaison rotule. La liaison mécanique comprend par exemple une pièce intermédiaire qui relie une zone d'appui de l'ensemble solaire à une zone de réception des supports 120,130.

Ces degrés de libertés permettent par exemple la mise en mouvement des panneaux au moyen de moyens d'activation M_{act}.

### Configurations fixes de l'ensemble solaire

Selon un mode de réalisation, les panneaux solaires 111 de l'ensemble solaire 110 sont aptes à être fixés au support secondaire 130 en en des zones de réception fixes. Il s'agit par exemple de zones de réception fixes positionnées sur les premières poutres secondaires Pₛ₁ du support secondaire 130. Il s'agit par exemple de zones de réception espacées selon la première direction D₁, la deuxième direction D₂, ou des directions sensiblement parallèles à ces directions.

Les zones de réception correspondent par exemple à des points de liaison entre les côtés des panneaux solaires 111 et une portion longitudinale des premières poutres secondaires Pₛ₂. Préférentiellement, les zones de réception sont disposées sur le support secondaire 130 de sorte à permettre une inclinaison optimale de l'ensemble solaire.

Selon un mode de réalisation, l'ensemble solaire 110 est apte à être dans au moins une configuration opérationnelle dans laquelle soit :
- Les panneaux solaires 111 forment, avec un plan de référence P₁ défini par la première direction D₁ et la deuxième direction D₂, un premier angle primaire α₁ non nul compris entre 0° et 10° autour d'un premier axe X₁ parallèle à la première direction D₁ et un premier angle secondaire β₁ nul autour d'un deuxième axe Y₁ parallèle à la deuxième direction D₂, soit,
- Les panneaux solaires 111 forment, avec le plan de référence P₁, un deuxième angle primaire α₂ non nul compris entre 0° et - 10° autour du premier axe X₁ et le premier angle secondaire β₁, soit,
- Les panneaux solaires 111 forment, avec le plan de référence P₁, un deuxième angle secondaire β₂ non nul compris entre 0° et 10° autour du deuxième axe Y₂ et un troisième angle primaire α₃ nul autour du premier axe X₁, soit,
- Les panneaux solaires 111 forment, avec le plan de référence P₁, un troisième angle secondaire β₃ non nul distinct du deuxième angle secondaire β₂ autour du deuxième axe Y₁ et le troisième angle primaire α₃.

Selon un mode de réalisation, l'ensemble solaire est apte à être dans au moins une configuration opérationnelle dans laquelle soit :
- Les panneaux solaires 111 forment, avec le plan de référence P₁, le premier angle primaire α₁ et le deuxième angle secondaire β₂, soit,
- Les panneaux solaires 111 forment, avec le plan de référence P₁, le deuxième angle primaire α₂ et le deuxième angle secondaire β₂, soit,
- Les panneaux solaires 111 forment, avec le plan de référence P₁, le premier angle primaire α₁ et le troisième angle secondaire β₃, soit,
- Les panneaux solaires 111 forment, avec le plan de référence P₁, le deuxième angle primaire α₂ et le troisième angle secondaire β₃.

### Configurations mobiles de l'ensemble solaire

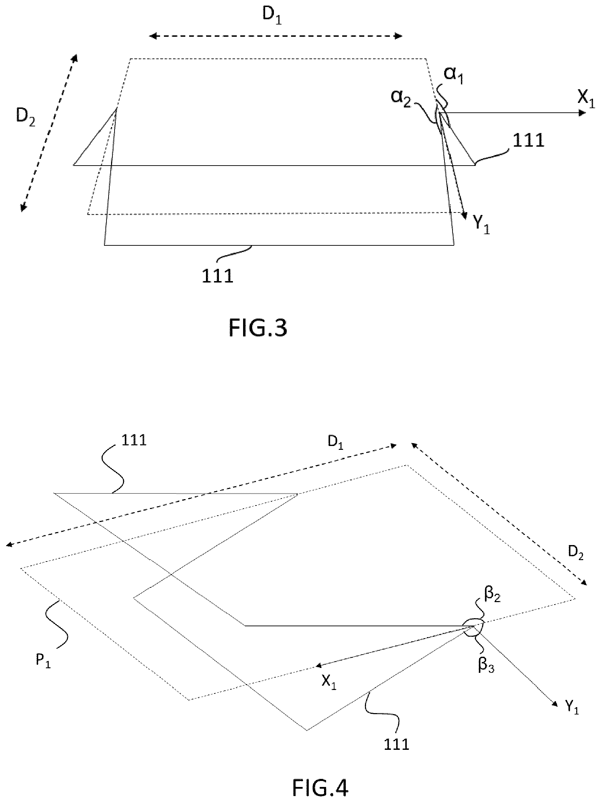

Selon un mode de réalisation, en référence aux figures 3, 4 et 5, l'ensemble solaire est en appui sur le support secondaire 130 et relié audit ensemble support 130 de sorte à permettre de faire varier des angles primaires αₓ et des angles secondaires βₓ formés par les panneaux solaires 111 avec un plan de référence Pₓ autour d'un premier axe Xₓ et autour d'un deuxième axe YX.

Selon un mode de réalisation, au moins un panneau solaire 111 est relié mécaniquement au support secondaire 130 par l'intermédiaire d'une ou plusieurs pièces de liaison. Il s'agit par exemple de liaisons rotules reliées à une bague, chaque bague étant en liaison glissière avec un guide. L'ensemble support 120 comprend par exemple des actionneurs, tel que des vérins pneumatiques, hydrauliques ou électriques pour faire varier la position des bagues le long des guides et ainsi faire varier les angles primaires αₓ et les angles secondaires βₓ des panneaux solaires 111.

Selon un mode de réalisation, l'ensemble solaire 110 se trouve dans une configuration opérationnelle dans laquelle les panneaux solaires 111 forment un angle primaire αₓ compris entre -10° et 10° avec le plan de référence P₁ autour d'un premier axe X₁ parallèle à la première direction.

Selon un mode de réalisation, l'ensemble solaire 110 se trouve dans une configuration opérationnelle dans laquelle les panneaux solaires 111 forment un angle secondaire βₓ compris entre -10° et 10° avec le plan de référence P₁ et autour du deuxième axe Y₁

Selon un mode de réalisation, l'ensemble solaire 110 se trouve dans une configuration opérationnelle dans laquelle les panneaux solaires 111 forment un angle primaire αₓ compris entre -10° et 10° avec le plan de référence P₁ autour du premier axe X₁ et dans laquelle il forme un angle secondaire βₓ compris entre -10° et 10° avec le plan de référence P₁ autour du deuxième axe Y₁.

Un avantage de former des angles dont les valeurs sont comprises dans les intervalles précités est de limiter la prise au vent de l'ensemble solaire, et donc de limiter le besoin en lestage et en renforts de la structure pour assurer sa stabilité.

Selon un mode de réalisation, l'ensemble solaire 110 est apte à être dans une configuration dans laquelle l'inclinaison d'au moins un panneau solaire 111 est variable selon la troisième direction D₃. Un avantage des de permettre des inclinaisons dans une pluralité de directions de l'espace, par exemple à 360°.

### Supports de l'ensemble support

Selon un mode de réalisation, au moins un support primaire 121,122 délimite une première cavité C₁. La première cavité C₁ s'étend par exemple à l'intérieur d'une première poutre primaire Pₚ₁ d'un support primaire 121,122. Selon un autre exemple, la première cavité C₁ s'étend dans la première poutre primaire Pₚ₁ et dans la deuxième poutre primaire Pₚ₂ d'au moins un support primaire 121,122.

### Structure interne

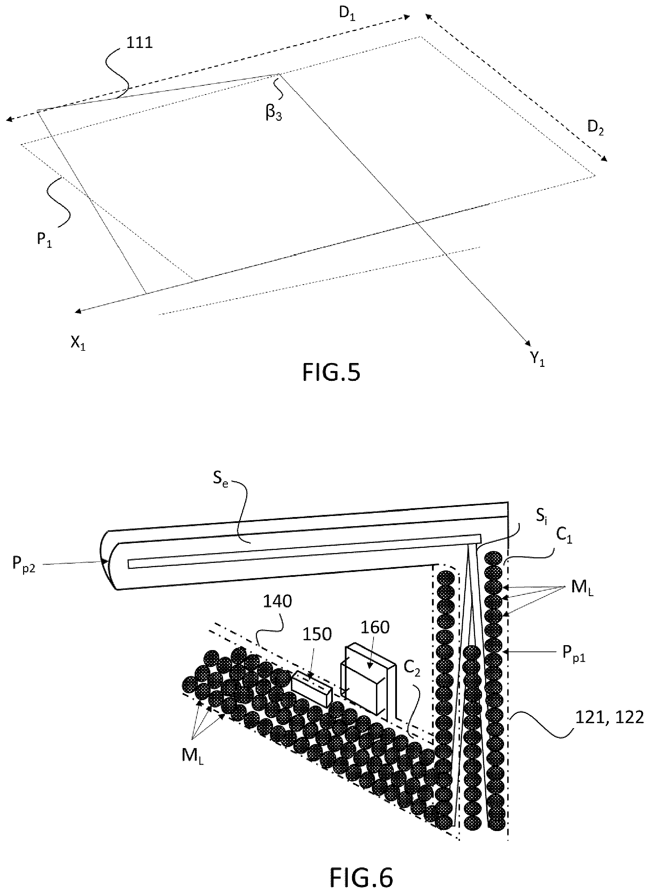

Selon un mode de réalisation, en référence à la figure 6, au moins un support primaire 121,122 comprend une structure interne Sᵢ. La structure interne Si est par exemple disposée dans la première cavité C₁. La structure interne Si comprend par exemple de l'acier, du bois, ou tout autre matériau rigide adapté. La structure interne Si comprend par exemple des poutres en I à Profil Normalisé, également désignées par l'acronyme IPN. La structure interne Si comprend par exemple deux premières portions longitudinales dont des premières extrémités sont en contact avec le sol et comprenant des deuxièmes extrémités sur lesquelles reposent une deuxième portion longitudinale.

Selon un mode de réalisation, les premières portions longitudinales de la structure interne Si se croisent selon un angle prédéfini. Selon un cas, ce croisement s'effectue à proximité des premières extrémités. Dans ce cas, un avantage est d'améliorer la stabilité au sol de la structure interne Sᵢ. Selon un autre cas, ce croisement s'effectue à proximité des deuxièmes extrémités. Dans ce cas, cela permet de renforcer la stabilité de la deuxième portion longitudinale qui repose sur les deuxièmes extrémités des premières portions longitudinales.

Selon un mode de réalisation, chaque support primaire 121, 122 comprend une base. Les bases servent par exemple de points d'ancrage au sol à l'ensemble support 120. Les bases s'étendent par exemple suivant une direction sensiblement parallèle à la deuxième direction D₂. Les bases s'étendent par exemple en regard des deuxièmes poutres primaires Pₚ₂.

Les bases peuvent comprendre une portion allongée s'étendant selon une direction sensiblement parallèle à la deuxième direction D₂.

Un avantage est d'améliorer la stabilité de la structure 100 en augmentant la surface de contact au sol des bases.

Selon un mode de réalisation, l'ensemble support 120 comprend des fondations. La structure interne Si est par exemple fixée aux fondations. Les fondations sont par exemple ancrées au sol. Les fondations permettent de renforcer la stabilité au sol de la structure interne Sᵢ.

Selon un mode de réalisation, l'ensemble support comprend des portions basses de lestage reliées aux bases. Il s'agit par exemple de portion s'étendant selon la deuxième direction et dans un sens opposé à un sens dans lequel s'étend la deuxième poutre primaire Pₚ₂ d'un support primaire 121, 122. Les portions basses de lestage comprennent par exemple le matériau de lestage M_{L}.

Un avantage des portions basses de lestage est de contribuer à la stabilité de la structure, notamment en contrebalançant les efforts éventuels dues à la géométrie des supports primaires 121, 122 et aux charges des panneaux solaires sur l'ensemble support 120.

Selon un mode de réalisation, les portions basses de lestage débouchent sur la première cavité C₁.

Selon divers exemples, la structure interne Si présentent des formes diverses, telles qu'une forme en C, ou encore une forme en U renversé. Dans ce cas, les points d'appui au sol de la structure interne Si sont par exemple situés sur la branche du C ou du U renversé en contact avec le sol. Un avantage de la mise en oeuvre de telles formes pour la structure interne Si est de renforcer sa stabilité au sol. Toutefois, ce mode de réalisation de l'invention ne se limite pas aux formes précitées. L'invention est susceptible d'être mise en oeuvre avec tout type de structure interne Si dont la forme est adaptée pour assurer une stabilité optimale.

Dans un mode de réalisation, l'ensemble support 120 comprend une structure additionnelle reliée à la structure externe Sₑ. La structure additionnelle contribue à la stabilité de la structure 100. Elle comporte par exemple les mêmes matériaux que la structure interne Sᵢ. Elle est par exemple mise en oeuvre en complément ou en remplacement de la structure interne Sᵢ. Elle est par exemple reliée à la surface externe de la structure externe Sₑ.

### Matériau de lestage

Selon un mode de réalisation, en référence à la figure 7, l'ensemble support comprend un matériau de lestage M_{L}. Le matériau de lestage M_{L} favorise le maintien de la structure 100 dans une position montée et stable. L'ensemble support comprend par exemple entre 1 tonne et 4 tonnes de matériau de lestage M_{L}. Le matériau de lestage M_{L} est par exemple réparti dans des cavités internes des éléments structurels compris par l'ensemble support 120, telle que la première cavité C₁. Selon un exemple, chaque support primaire 121,122 comprend entre 1 tonne et 1.5 tonnes de matériau de lestage M_{L}.

Dans des modes de réalisation dans lesquels l'ensemble support comprend d'autres éléments structurels, le matériau de lestage M_{L} est par exemple également réparti dans ces autres éléments structurels.

Le matériau de lestage M_{L} comprend par exemple un matériau de lestage poreux. On entend par « matériau poreux » un matériau solide renfermant des pores ou des cavités de petites tailles pouvant contenir un ou plusieurs fluides sous forme liquide ou gazeuse. Le matériau de lestage M_{L} comprend par exemple un agglomérat granulaire. Le matériau de lestage M_{L} comprend par exemple un granulat, tel que du sable, des gravillons ou du gravier.

Selon un mode de réalisation, la première poutre primaire Pₚ₁ d'au moins un support primaire 121,122 comprend le matériau de lestage M_{L}.

Selon un mode de réalisation, les bases comprennent une cavité interne remplie du matériau de lestage M_{L}.

Selon un mode de réalisation, les cavités internes des bases débouchent sur la première cavité C₁.

Selon un mode de réalisation, en référence à la figure 7, au moins un support primaire 121, 122 comprend une ouverture 127. L'ouverture 127 est par exemple de forme circulaire. L'ouverture est par exemple ménagée dans la deuxième poutre primaire Pₚ₂ d'un support primaire 121, 122.

Selon un mode de réalisation, l'ouverture 127 est débouchante sur la première cavité C₁.

Un avantage est de permettre l'acheminement des eaux de pluies dans le matériau de lestage poreux. L'absorption des eaux de pluies par le matériau de lestage poreux permet d'augmenter la densité du matériau, et par conséquent de renforcer la stabilité de la structure 100. Par exemple, la densité du sable est d'environ 1600 k.m⁻³, tandis que la densité du sable humide est d'environ 1900 kg.m⁻³.

Selon un mode de réalisation, au moins une deuxième poutre primaire Pₚ₂ comprend une gouttière permettant d'acheminer l'eau de pluie dans l'ouverture 127. La gouttière comprend par exemple des bordures incurvées pour faciliter l'écoulement de l'eau. L'ouverture 127 est par exemple ménagée dans la gouttière en une extrémité de la deuxième poutre primaire Pₚ₂.

Selon un mode de réalisation, l'ouverture 127 comprend un filtre.

Selon un mode de réalisation, l'ensemble support comprend au moins une ouverture dimensionnée pour permettre le passage du matériau de lestage M_{L}. Il s'agit par exemple d'une ouverture positionnée sur une portion supérieure d'un support primaire 121,122. L'ouverture est par exemple ménagée dans la première poutre primaire Pₚ₁ d'un support primaire 121, 122.

Selon un mode de réalisation, l'ouverture 127 est dimensionnée pour permettre l'introduction du matériau de lestage M_{L} dans un pilier 122,132 de l'ensemble support.

### Structure externe et habillage

Selon un mode de réalisation, l'ensemble support 120 comprend une structure externe Sₑ. La structure externe Sₑ délimite des frontières d'un volume intérieur de l'ensemble support 120, qui comprend par exemple la première cavité C₁. La structure externe Sₑ contient par exemple la structure interne Si et le matériau de lestage M_{L}.

Selon un mode de réalisation, la structure externe Sₑ comprend du métal. La structure externe Sₑ comprend par exemple un alliage d'acier, tel qu'un acier galvanisé.

Selon un mode de réalisation, la structure externe Sₑ comprend un matériau composite.

Selon un mode de réalisation, l'ensemble support 120 comprend un habillage. L'habillage recouvre au moins partiellement la structure externe Sₑ. L'épaisseur de l'habillage est par exemple comprise entre 250 µm et 450 µm. Le grammage de l'habillage est par exemple compris entre 350 g.m⁻² et 550 g.m².

Selon un mode de réalisation, l'habillage de la structure externe Sₑ comprend un film photovoltaïque. Il s'agit par exemple d'un film comprenant des polymères organiques. Il s'agit par exemple d'un film flexible qui épouse au moins partiellement la forme de la structure externe.

Selon un mode de réalisation, l'ensemble support 120 comprend un revêtement étanche. Selon un cas, le revêtement étanche est appliqué sur une surface interne de la structure externe. La surface interne délimite par exemple la première cavité C₁. Selon un autre cas, le revêtement est appliqué sur une surface externe de la structure externe.

Un avantage est de réduire les risques de rouille de la structure externe causés par l'humidité extérieure ou encore par l'humidité provenant de la récupération des eaux de pluies et du matériau de lestage.

Selon un mode de réalisation, l'ensemble support 120 comprend des plaques de support. Les plaques de support sont par exemple fixées au sol. La structure externe Sₑ est par exemple fixée aux plaques de support. Les plaques de support sont par exemple en appui les unes sur les autres et chacune fixées au sol.

### Bloc de liaison et accumulateur

Selon un mode de réalisation, l'ensemble support 120 comprend un bloc de liaison 140. Le bloc de liaison 140 relie les supports 120,130. Le bloc de liaison 140 est par exemple un bloc de forme sensiblement rectangulaire. Le bloc de liaison 140 est par exemple en contact avec le sol. Le bloc de liaison 140 est par exemple fixé au sol.

Selon un mode de réalisation, le bloc de liaison 140 comprend au moins un accumulateur 150. L'accumulateur 150 permet de stocker de l'énergie électrique. L'accumulateur comprend par exemple une batterie. Les batteries comprennent par exemple des batteries lithium-ion. Selon un autre exemple, l'accumulateur 150 est une batterie à électrolyte solide. Il s'agit par exemple d'une batterie entièrement solide au silicium. Toutefois, l'invention ne se limite pas aux technologies de batteries précitées. Tout moyen de stockage d'énergie électrique adapté est susceptible d'être mis en oeuvre dans le cadre de l'invention.

Selon un mode de réalisation, le bloc de liaison 140 comprend une pluralité d'accumulateurs 150. Il s'agit par exemple de batteries de mêmes technologies, ou d'une combinaison de plusieurs technologies de batteries combinées entre elles.

Selon un mode de réalisation, le bloc de liaison 140 comprend des compartiments intérieurs. Les compartiments intérieurs permettent par exemple d'accueillir un ou plusieurs accumulateurs 150.

Selon un mode de réalisation, le bloc de liaison 140 comprend une deuxième cavité C₂. On entend par « le bloc de liaison comprend une deuxième cavité » que l'intérieur du bloc de liaison 140 est au moins partiellement creux. La deuxième cavité s'étend par exemple à l'intérieur du bloc de liaison 140 et vers les supports 120,130.

Selon un mode de réalisation, le bloc de liaison 140 comprend le matériau de lestage M_{L}. Le matériau de lestage M_{L} est par exemple disposé dans la deuxième cavité C₂.

Selon un mode de réalisation, la deuxième cavité C₂ est reliée à la première cavité C₁. Dans ce cas, la première cavité C₁ et la deuxième cavité C₂ forment une unique cavité.

Un avantage est de permettre une communication fluidique entre la première cavité C₁ et la deuxième cavité C₂. Ainsi, lorsque les deux cavités comprennent le matériau de lestage poreux, un avantage est de permettre l'écoulement de l'eau dans ces deux cavités pour augmenter la densité du matériau et donc renforcer la stabilité de la structure.

### Onduleur photovoltaïque

Selon un mode de réalisation, le bloc de liaison 140 comprend au moins un convertisseur. Il s'agit par exemple d'un convertisseur solaire, également appelé onduleur photovoltaïque. Le convertisseur est connecté électriquement aux panneaux solaires 110. Le convertisseur permet de convertir le courant continu produit par les panneaux solaires 110 en courant alternatif. Le convertisseur est par exemple un onduleur dit « ongrid » ou un onduleur autonome dit « offgrid ». Le convertisseur est par exemple un micro-onduleur, un onduleur de chaîne, un onduleur à batterie, ou encore un onduleur hybride. Le convertisseur est par exemple placé dans un compartiment intérieur du bloc de liaison 140. Préférentiellement, le convertisseur est installé dans un compartiment intérieur étanche dans le bloc de liaison 140. Il est par exemple positionné à proximité de l'accumulateur 150 dans le bloc de liaison 140. L'accumulateur 150 et le convertisseur sont par exemple positionnés dans un même compartiment, ou dans des compartiments différents communiquant pour permettre le passage de câbles électriques.

Dans un mode de réalisation, le convertisseur est positionné dans un support primaire 121, 122 de l'ensemble support 120. Il est par exemple positionné dans une portion inférieure d'un support primaire 121, 122, par exemple dans une base.

Selon un mode de réalisation, la structure 100 comprend des câbles électriques. Les câbles électriques permettent de connecter électriquement divers équipements, tels que l'ensemble solaire, l'onduleur et l'accumulateur 150.

Selon un mode de réalisation, l'ensemble support 120 comprend des compartiments de câbles électriques.

Les compartiments de câbles électriques sont par exemple agencés à l'intérieur d'un support primaire 121, 122 et/ou à l'intérieur du bloc de liaison 140, par exemple sur une face interne d'un support primaire 121, 122 et/ou du bloc de liaison 140 et des supports primaires 121,122. Les compartiments de câbles électriques permettent de protéger les câbles électriques d'une dégradation éventuelle, par exemple par contact avec le matériau de lestage ou encore avec l'eau de pluie acheminée dans les cavités. Les compartiments de câbles électriques s'étendent par exemple à travers le bloc de liaison 140 et à travers les supports primaires 121,122 jusqu'aux panneaux solaires 111 l'ensemble solaire 110 pour permettre le passage des câbles électriques depuis les panneaux solaires 111 jusqu'à l'onduleur et jusqu'aux batteries agencés dans le bloc de liaison 140. Les compartiments de câble sont par exemple accessibles depuis l'extérieur pour permettre la maintenance des câbles électriques. Dans ce cas, l'ensemble support comprend des moyens d'accès aux compartiments, tels que des moyens d'ouverture des compartiments disposés sur la structure externe.

Selon un mode de réalisation, le bloc de liaison 140 comprend une portion creuse ménagée dans une partie supérieure. La portion creuse est par exemple de forme sensiblement rectangulaire. La portion creuse est par exemple apte à accueillir de la terre pour accueillir des plantes.

Selon un mode de réalisation, les supports primaires 121,122 comprend des moyens d'acheminement de l'eau de pluie jusqu'à la portion creuse du bloc de support 140. Il s'agit par exemple d'un canal dédié s'étendant au travers de la première cavité C₁ et de la deuxième cavité C₂.

Selon un mode de réalisation, le bloc de liaison 140 comprend un matériau transparent. Il s'agit par exemple de plexiglas.

Un avantage est de rendre visible les éléments internes au bloc de liaison telles que les batteries et les câbles électriques. Cela permet notamment de détecter visuellement un défaut éventuel dans l'installation et de planifier des opérations de maintenance le cas échéant.

Selon un mode de réalisation, le bloc de liaison 140 comprend plusieurs compartiments pouvant être ouverts pour accueillir un ou plusieurs convertisseurs, les batteries et les câbles électriques. Les compartiments sont par exemple accessibles par un opérateur pour permettre des opérations de maintenance.

Selon un mode de réalisation, la structure 100 comprend un système « Maximum power point tracker », également désigné par l'acronyme « système MPPT ».

Un avantage est d'obtenir une puissance maximale possibles depuis l'ensemble solaire.

### Borne de recharge de véhicule

Selon un mode de réalisation, l'ensemble support comprend une borne de recharge de véhicule 160. La borne de recharge de véhicule 160 est par exemple positionnée sur le bloc de liaison 140. Le bloc de liaison 140 comprend par exemple un support pour soutenir la borne de recharge de véhicule 160. Le support est par exemple de forme rectangulaire. Le support est par exemple positionné sur la partie supérieure du bloc de liaison 140.

Selon un mode de réalisation, la borne de recharge de véhicule est connectée électriquement à l'accumulateur 150.

Un avantage est d'utiliser une portion de l'énergie électrique stockée pour recharger un véhicule garé sous la structure.

Selon un mode de réalisation, l'ensemble support 120 comprend une pluralité de bornes de recharge de véhicules 160 connectées électriquement à l'accumulateur 150.

Selon un mode de réalisation, la borne de recharge de véhicule 160 est connectée électriquement au convertisseur. Un avantage est de réutiliser directement l'énergie électrique produite par les panneaux solaires 110 et convertie.

Selon un mode de réalisation, la borne de recharge de véhicule 160 est connectée au réseau électrique.

Selon un mode de réalisation, le bloc de liaison 140 comprend des moyens d'accueil d'au moins une borne de recharge de véhicule 160. Les moyens d'accueil comprennent par exemple une cavité dimensionnée pour recevoir la borne de recharge de véhicule. Selon un exemple, les moyens d'accueil comprennent des moyens de fixation de la borne de recharge de véhicule au bloc de liaison 140.

### Système d'éclairage

Selon un mode de réalisation, la structure 100 comprend un système d'éclairage. Le système d'éclairage comprend par exemple un ensemble de LEDs, de l'anglais « Light Emitting Diodes ». Le système d'éclairage est par exemple positionné sur le bloc supérieur 121,122 d'un support 120,130.

Selon un mode de réalisation, le système d'éclairage est connecté électriquement à l'accumulateur 150. Un avantage est de réutiliser une portion excédentaire de l'énergie électrique stockée pour fournir de l'éclairage sous la structure.

Selon un mode de réalisation, le système d'éclairage est connecté électriquement au convertisseur.

Selon un mode de réalisation, le système d'éclairage est connecté au réseau électrique.

### Modularité

Dans un mode de réalisation, l'ensemble support 120 est modulaire. On entend par « modulaire » que des éléments de l'ensemble support 120 peuvent être démontés et remplacés ou non, ou encore que de nouveaux éléments peuvent être ajoutés à l'ensemble support 120, par exemple des supports primaires additionnels ou des éléments de passage de câble. L'ensemble support 120 comprend par exemple des éléments mécaniques aptes à recevoir au moins un élément de support modulaire additionnel. Les éléments mécaniques comprennent par exemple des éléments de liaison aptes à recevoir des vis ou tout autre moyen de liaison ou d'assemblage mécanique pour l'ajout d'un élément de support supplémentaire. Les éléments mécaniques sont par exemple aptes à recevoir des éléments modulaires permettant le passage de câbles électriques, par exemple reliant les deux supports primaires 121, 122. Selon un autre exemple, les éléments modulaires comprennent des éléments aptes à recevoir un autre support primaire. Dans ce cas, il est par exemple possible de démonter l'un des supports primaires initiaux.

Dans un mode de réalisation, l'ensemble support 120 comprend des éléments mécaniques aptes à recevoir le bloc de liaison 140. Il s'agit par exemple d'éléments de liaison mécanique positionnés sur les supports primaires 121, 122.

Dans un mode de réalisation, l'ensemble solaire 110 est modulaire. On entend par « modulaire » que des éléments de l'ensemble solaire 110 peuvent être démontés et remplacés ou non, ou encore que de nouveaux éléments peuvent être ajoutés à l'ensemble solaire 110, par exemple des panneaux solaires additionnels. Selon ce cas, l'ensemble solaire 110 comprend par exemple des supports solaires 200 additionnels pour recevoir des panneaux solaires 111 additionnels, des éléments mécaniques additionnels pour recevoir des supports solaires 200 additionnels, ou des éléments mécaniques additionnels autres que les supports solaires 200 pour recevoir un ou plusieurs panneaux solaires 111 supplémentaires.

### Pilotage de l'ensemble solaire

Selon un mode de réalisation, la structure 100 comprend un système de pilotage. Le système de pilotage permet de faire varier les angles primaires αₓ et les angles secondaires βₓ des panneaux solaires de l'ensemble solaire par rapport à un plan de référence Pₓ. Le système de pilotage comprend par exemple un calculateur pour mettre en oeuvre des fonctions ou des calculs en fonction de divers paramètres. Les paramètres comprennent par exemple des mesures effectuées par des capteurs de l'ensemble solaire tels que des anémomètres ou des capteurs de luminosité. Les fonctions mises en oeuvre sont par exemple des fonctions de comparaison de valeurs mesurées par les capteurs avec des valeurs seuil. Par exemple, lorsque les anémomètres mesurent une force du vent supérieure à un seuil donnée, le système de pilotage commande des moyens d'actionnement des moyens de liaison entre les panneaux solaires 111 de l'ensemble solaire 110 et le support secondaire 130

Le système de pilotage active par exemple les moyens d'activation M_{act}. Les moyens d'activation M_{act} comprennent par exemple une console de commande qui est par exemple intégrée à la structure et alimentée par les panneaux solaires 111. Les moyens d'activation M_{act} sont par exemple pilotables par un utilisateur pour faire varier les angles des panneaux solaires 111 de l'ensemble solaire 110. Selon un autre exemple, la structure comprend un calculateur comprenant un programme préenregistré de pilotage des panneaux solaires, par exemple en fonction de paramètres de dates et d'heure, ou encore en fonction de paramètres mesurés par des capteurs positionnés sur la structure. Par exemple, des capteurs de luminosité peuvent être positionnés en différents points de la structure et les données de luminosité mesurées par ces capteurs permettent de déterminer une orientation optimale des panneaux solaires pour obtenir une production d'électricité optimale. Le calculateur commande par exemple les moyens d'activation M_{act} pour faire varier l'orientation des panneaux solaires en fonction de ces paramètres.

Dans un mode de réalisation, les moyens d'activation M_{act} comprennent une interface de commande locale pour piloter des orientations des panneaux solaires 111 de l'ensemble solaire 110.

Dans un mode de réalisation, les moyens d'activation M_{act} sont connectés à un réseau de données pour piloter des orientations des panneaux solaires de la structure depuis une interface connectée à un serveur distant.

Dans un mode de réalisation, la structure 100 comprend une interface de communication pour recevoir des données et piloter des orientations des panneaux solaires 111 de l'ensemble solaire 110 en fonction du traitement de ces données reçues par un calculateur. Il s'agit par exemple de données mesurées localement par des capteurs, ou encore de données reçues depuis une base de données distante, telles que des données météorologiques prévisionnelles.

Ainsi, les moyens d'activation M_{act} permettent de faire varier les angles primaires ax et les angles secondaires βx formés par les panneaux solaires 111 avec un plan de référence Px.

Le système de pilotage active par exemple des vérins pour ramener chaque panneau solaire 111 dans un plan de référence Pₓ lorsque les anémomètres mesurent une force du vent supérieure à un seuil donné. Un avantage est de réduire la prise au vent de l'ensemble solaire.

Selon un autre exemple, le système de pilotage pilote le déplacement des panneaux solaires 111 de l'ensemble solaire 110 jusqu'à ce que les anémomètres transmettent au calculateur une valeur de force du vent inférieure à un seuil donnée.

Selon un autre exemple, le système de pilotage commande le déplacement des panneaux solaires 111 de l'ensemble solaire 110 lorsque le calculateur reçoit des valeurs de luminosité inférieures à un seuil donné. Dans ce cas, l'ensemble solaire comprend des capteurs de luminosité qui transmettent par exemple des valeurs mesurées au calculateur à une fréquence donnée. Le calculateur met par exemple en oeuvre des fonctions de comparaison des valeurs transmises par les capteurs de luminosité avec des seuils à une fréquence donnée, par exemple toutes les minutes. Selon un exemple, lorsque les valeurs transmises par les capteurs de luminosité sont inférieures aux seuils sur un intervalle de temps donné, le système de pilotage commande le déplacement des panneaux solaires 111 de l'ensemble solaire 110 jusqu'à ce que les valeurs mesurées par les capteurs de luminosité soient supérieures à un seuil donné. Les capteurs transmettent par exemple les valeurs de luminosité à une fréquence plus élevée lors du déplacement de l'ensemble solaire.

Un avantage est d'ajuster la position des panneaux solaires de l'ensemble solaire lorsque les panneaux solaires ne reçoivent plus suffisamment de rayonnement solaire pour permettre une production électrique suffisante, par exemple en raison de la présence d'une ombre portée à certains moments de la journée.

Selon un mode de réalisation, le système de pilotage commande l'alimentation des bornes de recharge de véhicules. Par exemple, le système de pilotage commande l'alimentation des bornes de recharge de véhicules en fonction de divers paramètres. Les paramètres comprennent par exemple un niveau de charge de l'accumulateur 150, un prix de l'électricité, une heure de la journée ou des mesures des capteurs positionnés sur l'ensemble solaire. Le calculateur calcule par exemple des fonctions de ces différents paramètres pour exécuter une loi de commande pour alimenter la borne de recharge de véhicule. La loi de commande permet par exemple d'alimenter la borne de recharge de véhicule soit directement depuis le convertisseur, soit depuis l'accumulateur ou soit depuis le réseau électrique, en fonction de ces différents paramètres.

Un avantage est d'optimiser la gestion énergétique du système et de réduire le coût de consommation tout en permettant une alimentation électrique constante des bornes de recharge de véhicule.

## Revendications

1. Structure (100) destinée à ombrager une zone de stationnement de véhicules, ladite structure (100) comprenant :
▪ Un ensemble solaire (110) comprenant une pluralité de panneaux solaires photovoltaïques (111) ;
▪ Un ensemble support (120) modulaire comprenant :
▪ au moins deux supports primaires (121,122) modulaires espacés selon une première direction (D₁) et comprenant chacun une première poutre primaire (Pp₁) et une deuxième poutre primaire (Pp₂), chaque deuxième poutre primaire (Pp₂) s'étendant selon une deuxième direction (D₂) sensiblement orthogonale à la première direction (D₁) et chaque première poutre primaire (Pp₁) s'étendant selon une troisième direction (D₃) verticale, et chaque deuxième poutre primaire (Pp₂) étant reliée à la première poutre primaire (Pp₁) de son support primaire (121,122) respectif, lesdits supports primaires (121, 122) comprenant des éléments de liaisons mécaniques aptes à recevoir un bloc de liaison (140) modulaire reliant lesdits supports primaires (121, 122), et comprenant chacun une base respective présentant une zone d'appui au sol ;
▪ le bloc de liaison (140) modulaire connecté aux éléments de liaisons mécaniques et reliant les supports primaires (121,122) ;
▪ des portions basses de lestage reliées aux bases respectives des supports primaires (121, 122) ;
▪ un support secondaire (130) pour supporter les panneaux solaires photovoltaïques (111) et comprenant une pluralité de premières poutres secondaires (Ps₁) s'étendant selon une direction sensiblement parallèle à la première direction (D₁), et présentant chacune au moins une zone d'appui sur chaque deuxième poutre primaire (Pp₂) de chaque support primaire (121, 122) ;
l'ensemble solaire (110) étant apte à se trouver dans une pluralité de configurations opérationnelles dans lesquelles les panneaux solaires (111) forment chacun un angle primaire (aₓ) non nul autour d'un axe primaire (Xₓ) sensiblement parallèle à la première direction (D₁) et un angle secondaire (βₓ) non nul autour d'un axe secondaire (Yₓ) sensiblement parallèle à la deuxième direction (D₂) et avec un plan de référence (Pₓ) défini par une direction sensiblement parallèle à ou confondue avec la première direction (D₁) et par une direction sensiblement parallèle à ou confondue avec la deuxième direction (D₂).

2. Structure (100) selon la revendication 1, dans laquelle l'ensemble solaire (110) est connecté à des moyens d'activation (M_{act}) pour faire varier les angles primaires (aₓ) et les angles secondaires (βₓ) formés par les panneaux solaires (111) avec un plan de référence (Pₓ).

3. Structure selon la revendication 2, dans laquelle l'ensemble support (120) comprend une pluralité de supports pour soutenir les panneaux solaires (111), dits supports solaires (200), présentant chacun au moins une zone d'appui avec au moins une première poutre secondaire (Pₛ₁), et connectés aux moyens d'activation (M_{act}) pour faire varier les angles primaires (aₓ) et les angles secondaires (βₓ) desdits panneaux solaires (111).

4. Structure selon la revendication 3, dans laquelle au moins un support solaire (200) comprend un premier élément longitudinal (L₁) relié à un panneau solaire (111) en une première zone de liaison et qui s'étend dans une direction sensiblement parallèle à la première direction (D₁) ou sensiblement parallèle à la deuxième direction (D₂), et un deuxième élément longitudinal (L₂) relié au même panneau solaire (111) en une deuxième zone de liaison et qui s'étend dans une direction sensiblement parallèle à la troisième direction (D₃), le premier élément longitudinal (L₁) et le deuxième élément longitudinal (L₂) étant reliés mécaniquement en un point de liaison mécanique, les moyens d'activation (M_{act}) étant configurés pour actionner le support solaire (200) pour faire varier les angles primaires (aₓ) et les angles secondaires (βₓ) dudit panneau solaire (111) avec un plan de référence (PX).

5. Structure selon l'une quelconque des revendications 2 à 4, dans laquelle les moyens d'activation (M_{act}) comprennent un calculateur configuré pour piloter une pluralité de panneaux solaires (111) de l'ensemble solaire (110) soit automatiquement à partir de paramètres prédéfinis, soit au moyen d'une interface de commande utilisateur locale ou depuis un serveur distant.

6. Structure (100) selon l'une quelconque des revendications précédentes, dans laquelle l'ensemble solaire (110) est apte à être dans au moins quatre configurations opérationnelles différentes comprenant :
▪ Une première configuration opérationnelle dans laquelle les panneaux solaires (111) forment, avec le plan de référence (P₁), un premier angle primaire (α₁) non nul autour d'un premier axe primaire (X₁) et un premier angle secondaire (β₁) nul autour d'un premier axe secondaire (Y₁) ;
▪ Une deuxième configuration opérationnelle dans laquelle les panneaux solaires (111) forment, avec le plan de référence (P₁), un deuxième angle primaire (α₂) non nul et distinct du premier angle primaire (α₁) autour du premier axe primaire (X₁), et le premier angle secondaire (β₁) autour du premier axe secondaire (Y1) ;
▪ Une troisième configuration opérationnelle dans laquelle les panneaux solaires (111) forment, avec le plan de référence (P₁), un deuxième angle secondaire (β₂) non nul autour du deuxième axe (Y₁) et un troisième angle primaire (α₃) nul autour du premier axe (X₁),
▪ Une quatrième configuration opérationnelle dans laquelle les panneaux solaires (111) forment, avec le plan de référence (P₁), un troisième angle secondaire (β₃) non nul distinct du deuxième angle secondaire (β₂) autour du deuxième axe (Y₁) et le troisième angle primaire (α₃) nul autour du premier axe (X₁).

7. Structure selon la revendication 6, dans laquelle l'ensemble solaire (110) est apte à être dans au moins quatre configurations opérationnelles supplémentaires comprenant :
▪ Une cinquième configuration opérationnelle dans laquelle les panneaux solaires (111) forment, avec le plan de référence (P₁), le premier angle primaire (α₁) et le deuxième angle secondaire (β₂) ;
▪ Une sixième configuration opérationnelle dans laquelle les panneaux solaires (111) forment, avec le plan de référence (P₁), le deuxième angle primaire (α₂) et le deuxième angle secondaire (β₂) ;
▪ Une septième configuration opérationnelle dans laquelle les panneaux solaires (111) forment, avec le plan de référence (P₁), le premier angle primaire (α₁) et le troisième angle secondaire (β₃),
▪ Une huitième configuration opérationnelle dans laquelle les panneaux solaires (111) forment, avec le plan de référence (P₁), le deuxième angle primaire (α₂) et le troisième angle secondaire (β₃).

8. Structure (100) selon l'une quelconque des revendications précédentes, dans laquelle l'ensemble solaire (110) comprend une pluralité de rangées de panneaux solaires (R_{1, x}) parallèles entre elles et espacées selon une direction sensiblement parallèle à la première direction (D₁) ou sensiblement parallèle à la deuxième direction (D₂), l'ensemble solaire (110) étant apte à être dans une pluralité de configurations opérationnelles dans chacune desquelles les panneaux solaires (111) de chaque rangée de panneaux solaires (R_{1, x}) forment, avec un plan de référence pris parmi une pluralité de plans de références (P_{1,x}) parallèles entre eux, un angle primaire (aₓ) autour d'un premier axe pris parmi une pluralité de premiers axes parallèles entre eux (X_{1, x})), et un angle secondaire (βₓ) autour d'un deuxième axe pris parmi une pluralité de deuxièmes axes (Y_{1, x}) parallèles entre eux.

9. Structure selon les revendications 2 à 7 et 8, dans laquelle l'ensemble solaire (110) et les moyens d'activation (M_{act}) sont configurés pour faire varier les angles primaires (aₓ) et les angles secondaires (βₓ) formés par les panneaux solaires (111) de chaque rangée de panneaux solaires (R₁, ₓ) de sorte que les rangées de panneaux solaires (R₁, ₓ) sont orientables indépendamment les unes des autres.

10. Structure (100) selon l'une quelconque des revendications précédentes, dans laquelle au moins un support primaire (121,122) comprend une structure externe (Sₑ) délimitant une première cavité (C₁) remplie au moins partiellement par un matériau de lestage (M_{L}) et comprenant une ouverture (127) positionnée sur sa deuxième poutre primaire (Pₚ₂) respective, la première cavité (C₁) débouchant sur ladite ouverture (127) pour permettre l'infiltration de l'eau de pluie dans ladite première cavité (C₁).

11. Structure selon la revendication 10, dans laquelle le matériau de lestage (M_{L}) comprend un matériau poreux.

12. Structure selon l'une quelconque des revendications 10 à 11, dans laquelle au moins un support primaire (121, 122) comprend une gouttière permettant l'acheminement de l'eau de pluie vers l'ouverture (127).

13. Structure (100) selon l'une quelconque des revendications 10 à 12, dans laquelle chaque support primaire (121,122) comprend une structure externe (Sₑ) délimitant la première cavité (C₁) et une structure interne (Sᵢ) disposée dans la première cavité (C₁) pour maintenir chaque support primaire (121,122) dans une position montée stable.

14. Structure (100) selon l'une quelconque des revendications 12 à 13, dans laquelle l'ensemble solaire (110) comprend au moins une deuxième gouttière encadrant au moins une rangée de panneaux solaires (111), et comprenant au moins une ouverture en une extrémité pour permettre l'écoulement de l'eau de pluie vers une première gouttière.

15. Structure (100) selon l'une quelconque des revendications 10 à 14, dans laquelle l'ensemble support (120) comprend un bloc de liaison (140) reliant les supports primaires (121,122) et comprenant une deuxième cavité (C₂) comprenant le matériau de lestage (M_{L}) débouchant sur la première cavité (C₁).
